# EUROPÄISCHE PATENTSCHRIFT

(11) **EP 1 454 811 B1**
(45) Veröffentlichungstag und Bekanntmachung des Hinweises auf die Patenterteilung: **23.05.2007**
(21) Anmeldenummer: 04450027.0
(22) Anmeldetag: 13.02.2004
(51) Int. Cl.: B62B 5/02

(54) **Treppengängiger Handwagen**
Stairclimbing trolley
Chariot pouvant monter des escaliers

(30) Priorität: 04.03.2003 AT 3122003
(43) Veröffentlichungstag der Anmeldung: 08.09.2004
(73) Patentinhaber: Bierma, Jochum Ing., A-4040 Linz (AT)
(72) Erfinder: Bierma, Jochum Ing., A-4040 Linz (AT)
(74) Vertreter: Hübscher, Helmut

(56) Entgegenhaltungen:
- EP-A- 1 129 923
- AT-B- 410 199
- DE-A1- 19 519 109

## Beschreibung

Die Erfindung bezieht sich auf einen treppengängigen Handwagen mit zwei in einem Fahrgestell gelagerten Laufrädern und mit einem als zweiarmigen Hebel ausgeführten Stützfuß, der mit seinem dem unteren Aufsetzende gegenüberliegenden Ende über die Hubhöhe entlang einer Stützfußführung geführt und zwischen dem Aufsetzende und dem oberen geführten Ende mit einem Kurbeltrieb verbunden ist.

Treppengängige Handwagen, wie Rollstühle oder Karren zum Fördern von Lasten, sind mit einer Hubeinrichtung versehen, mit deren Hilfe der Handwagen von Stufe zu Stufe angehoben oder abgesenkt werden kann. Günstige Konstruktionsverhältnisse ergeben sich in diesem Zusammenhang, wenn die Hubeinrichtung einen heb- und senkbaren Stützfuß aufweist, der auf eine Trittstufe aufgesetzt wird und das Fahrgestell des Handwagens je nach Fahrrichtung auf die nächste Stufe anhebt oder absenkt. Damit die Laufräder beim Aufwärtsfahren über die nächste Trittstufe angehoben und auf diese aufgesetzt werden können, muß der Stützfuß gegenüber dem Fahrgestell nicht nur eine Hubbewegung, sondern auch eine Bewegung in Fahrrichtung ausführen. Gleiches gilt für eine Handwagenbewegung treppabwärts, um die Laufräder zunächst von der einen Trittstufe abzuheben und um deren Vorderkante herum auf die darunterliegende Trittstufe abzusenken. Zu diesem Zweck ist es bekannt (EP 1 129 923 A2), das obere Ende des Stützfußes in einer sich über die Hubhöhe des Stützfußes erstreckenden Führungsschiene zu führen und den Stützfuß zwischen dem unteren Aufsetzende und dem oberen Führungsende an die Kurbel eines Kurbeltriebes anzulenken. Die neben der Hubbewegung durch den Kurbeltrieb bedingte Schwenkbewegung des Stützfußes um das obere Führungsende reicht jedoch bei den gedrängten Platzverhältnissen nicht aus, um die Laufräder über die jeweilige Trittstufe anheben oder absenken zu können. Aus diesem Grunde werden die Laufräder auf einem gegenüber der Kurbel zum Antrieb des Stützfußes um 180° Kurbel zum Antrieb des Stützfußes um 180° winkelversetzten Kurbelarm des Kurbeltriebes gelagert, so daß die Laufradachsen zusätzlich entlang einer Kreisbahn bewegt werden, was im Zusammenhang mit dem phasenverschobenen Antrieb des Stützfußes die erforderliche Bewegung der Laufräder gegenüber dem Aufsetzende des Stützfußes zur Überwindung einer Stufe sowohl der Höhe nach als auch quer dazu sicherstellt. Die zusätzliche Führung der Laufräder entlang einer zur Achse des Kurbeltriebes konzentrischen Kreisbahn macht jedoch diese Konstruktion aufwendig.

Der Erfindung liegt somit die Aufgabe zugrunde, einen treppengängigen Handwagen der eingangs geschilderten Art mit einfachen konstruktiven Mitteln so auszugestalten, daß trotz einer ortsfesten Lagerung der Laufräder im Fahrgestell ein sicheres Überwinden von Treppenstufen mit Hilfe eines hebund senkbaren Stützfußes gewährleistet werden kann.

Die Erfindung löst die gestellte Aufgabe dadurch, daß der Kurbeltrieb an einem am Stützfuß angelenkten Lenker angreift und daß für das dem Stützfuß gegenüberliegenden Ende des Lenkers eine quer zur Stützfußführung verlaufende Lenkerführung vorgesehen ist.

Da zufolge dieser Maßnahmen die Kurbel des Kurbeltriebes nicht unmittelbar, sondern über einen Lenker am Stützfuß angreift, der mit seinem dem Stützfuß gegenüberliegenden Ende quer zur Stützfußführung geführt wird, kann der Lenker aufgrund seiner endseitigen Führung bei einer Fahrt treppabwärts aus der Ruhestellung, die durch den angehobenen Stützfuß bestimmt wird, zunächst mit seinem Aufsetzende vor allem quer zur Stützfußführung verlagert werden, was ein Ausschwenken des Stützfußes über die die Laufrollen aufnehmende Trittstufe zur Folge hat, bevor der Stützfuß im wesentlichen über den Lenker abgesenkt und auf die nachfolgende untere Trittstufe aufgesetzt wird. Nach dem Aufsetzen des Aufsetzendes des Stützfußes auf der unteren Trittstufe werden die Laufräder von der oberen Trittstufe abgehoben und über die vordere Kante der Trittstufe hinweg auf die untere Trittstufe abgesenkt und zwar bei einer gleichzeitigen horizontalen Verlagerung, weil mit dem Rückbewegen des Lenkers in seine Ausgangsstellung wiederum eine Verlagerungsbewegung des Lenkers quer zur Stützarmführung verbunden ist. Bei einer Bewegung treppaufwärts wird in umgekehrter Bewegungsabfolge der Stützfuß auf die Trittstufe aufgesetzt, auf der die Laufräder aufruhen, um die Laufräder um die Vorderkante der nächsthöheren Trittstufe herum auf diese aufzusetzen. Über den Verlauf der Stützfußführung und der Lenkerführung sowie die wirksamen Hebelverhältnisse können den jeweiligen Anforderungen angepaßte Bewegungsbahnen des Aufsetzendes des Stützfußes gegenüber dem Fahrgestell für die jeweilige Hub- bzw. Senkbewegung vorgegeben werden.

Die Stützfußführung kann in an sich bekannter Weise aus einer Führungskulisse für das obere Ende des Stützfußes bestehen. Besonders einfache Konstruktionsverhältnisse ergeben sich allerdings, wenn die Stützfußführung aus einem einerseits am Fahrgestell und anderseits am oberen Ende des Stützfußes angelenkten Führungslenker besteht. Ein solcher Führungslenker könnte auch für die Lenkerführung vorgesehen werden, doch ist es im allgemeinen wegen des vergleichsweise geringen Platzangebotes günstiger, für die Lenkerführung eine Führungskulisse anzuordnen, um eine ausreichende Querverlagerung des Lenkers zu erreichen. Eine vorteilhafte Lenkerbewegung ergibt sich, wenn die Führungskulisse zur Querverlagerung des Lenkers im wesentlichen radial zum Kurbeltrieb verläuft.

In der Zeichnung ist der Erfindungsgegenstand beispielsweise dargestellt. Es zeigen:
Fig. 1 einen erfindungsgemäßen Handwagen in einer schematischen Seitenansicht und die
Fig. 2 bis 6 diesen Handwagen in verschiedenen Stellungen während der Befahrung einer Treppe in einem kleineren Maßstab.

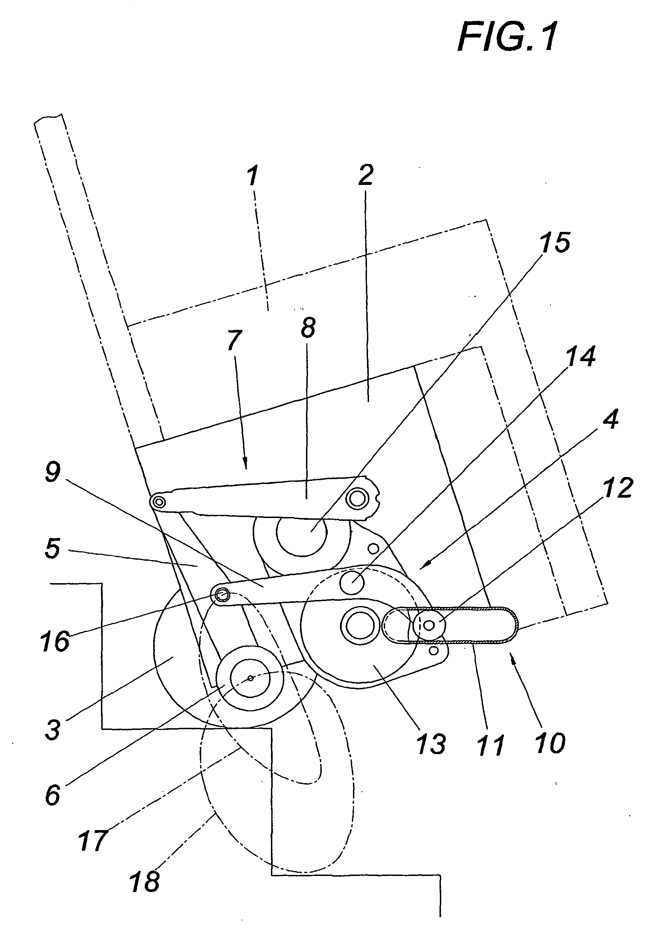

Der schematisch angedeutete Handwagen 1, beispielsweise eine Rollstuhl, weist gemäß der Fig. 1 in einem Fahrgestell 2 gelagerte Laufräder 3 auf, von denen das in der dargestellten Seitenansicht vordere aus Übersichtlichkeitsgründen weggelassen wurde. Die Hubeinrichtung 4, die den Handwagen 1 treppengängig macht, umfaßt einen Stützfuß 5, der als zweiarmiger Hebel ausgebildet ist und an seinem unteren Aufsetzende Stützrollen 6 trägt. An dem dem Aufsetzende gegenüberliegenden Ende ist eine Stützfußführung 7 in Form eines Führungslenkers 8 vorgesehen, der einerseits am Fahrgestell 2 und anderseits am oberen Ende des Stützfußes 5 angelenkt ist. Zwischen dem Aufsetzende und dem oberen Führungsende des Stützfußes 5 greift an diesem ein Lenker 9 an, dessen dem Stützfuß 5 gegenüberliegendes Ende in einer Lenkerführung 10 quer zur Stützfußführung 7 geführt wird. Diese Lenkerführung 10 ist gemäß dem Ausführungsbeispiel als Führungskulisse 11 ausgebildet, in die eine Führungsrolle 12 am Ende des Lenkers 9 eingreift. Der Lenker 9 wird über einen Kurbeltrieb 13 angetrieben, dessen den Lenker 9 tragender Kurbelzapfen mit 14 bezeichnet ist. Der Antrieb des Kurbeltriebes 13 erfolgt über einen Elektromotor 15. In der in Fig. 1 dargestellten Ausgangsstellung der Hubeinrichtung 4 befindet sich der Stützfuß 5 in einer oberen Hublage, wobei der Führungslenker 8 in der dargestellten, für die Treppenbefahrung vorgegebenen Neigungslage des Handwagens 1 angenähert horizontal verläuft, wie dies auch für die Lenkerführung 10 gilt, die radial zum Kurbeltrieb 13 ausgerichtet ist. Aufgrund dieser Ausrichtung der Lenkerführung 10 und der gewählten Winkelausbildung des Lenkers 9 ergibt sich bei einer Umdrehung des Kurbeltriebes 13 für die Anlenkachse 16 zwischen dem Lenker 9 und dem Stützfuß 5 eine strichpunktiert angedeutete Bewegungsbahn 17, die aufgrund der gewählten Hebelverhältnisse und der Führung des Stützfußes 5 über den Führungslenker 8 eine Bewegungsbahn 18 für die Stützrollen 6 bedingt.

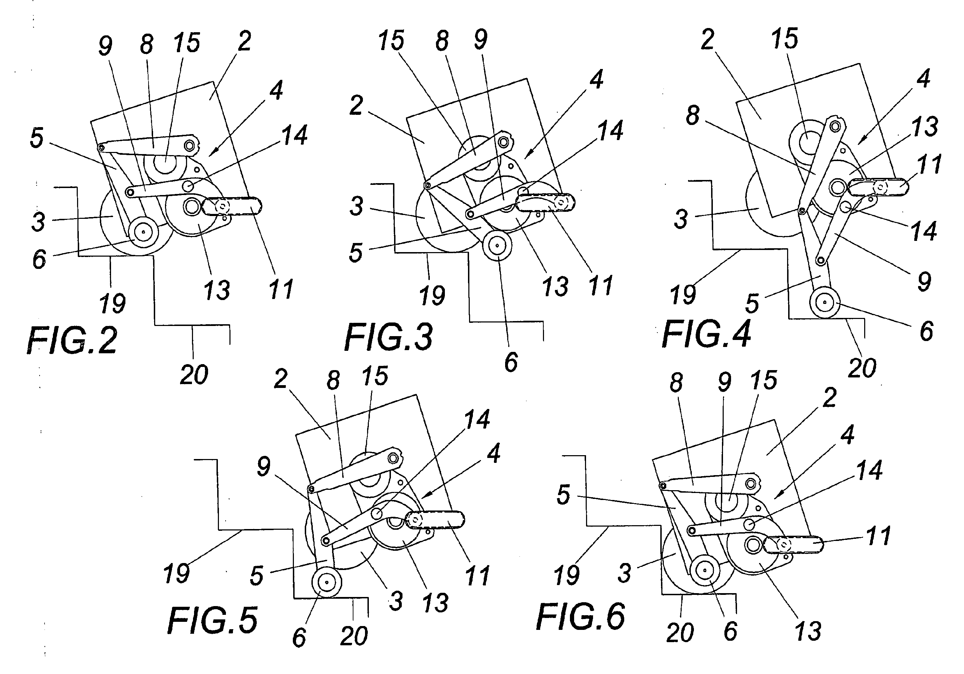

In den Fig. 2 bis 6 ist der durch die Bewegungsbahn 18 vorgegebene Bewegungsablauf für die Hubeinrichtung 4 anhand von einzelnen Bewegungsschritten für ein Befahren einer Treppe treppabwärts veranschaulicht. Der Handwagen 1 wird auf der jeweiligen Trittstufe 19 gegen die Vorderkante der Trittstufe 19 gerollt bis die Laufräder 3 in herkömmlicher Weise über an der Vorderkante abfallende Fühlerrollen gebremst werden. Der dann über den Motor 15 angetriebene Kurbeltrieb 13 bewirkt eine Verlagerung des Stützfußes 5 aus der in der Fig. 2 angedeuteten Ausgangsstellung mit den gebremsten Laufrädern 3 im wesentlichen über die Vorderkante der Trittstufe 19 hinaus, wobei die Stützrollen 6 oberhalb der Trittstufe 19 über deren Vorderkante bewegt werden, bevor der Stützfuß 5 auf die nachfolgende untere Trittstufe 20 aufgesetzt wird, wie dies aus dem in den Fig. 3 und 4 dargestellten Bewegungsablauf ersichtlich wird. Nach dem Aufsetzen der Stützräder 6 auf die untere Trittstufe 20 wird aufgrund der weiteren Abwärtsbewegung des Stützfußes 5 das Fahrgestell 2 mit den Laufrädern 3 von der oberen Trittstufe 19 abgehoben (Fig. 4) und nachfolgend auf die untere Trittstufe 20 aufgesetzt, wie dies in den Fig. 5 und 6 angedeutet wird. Nach dem Aufsetzen der Laufräder 3 auf der unteren Trittstufe 20 wird der Stützfuß 5 wieder in die Ausgangsstellung angehoben (Fig. 6), so daß der Handwagen 1 wieder an die Vorderkante der Trittstufe 20 gerollt und neuerlich um eine Stufe abgesenkt werden kann. Beim Treppaufsteigen erfolgt der Bewegungsablauf in umgekehrter Reihenfolge.

## Patentansprüche

1. Treppengängiger Handwagen mit zwei in einem Fahrgestell gelagerten Laufrädern (3) und mit einem als zweiarmigen Hebel ausgeführten Stützfuß (5) der mit seinem dem unteren Aufsetzende gegenüberliegenden Ende über die Hubhöhe entlang einer Stützfußführung (7) geführt und zwischen dem Aufsetzende und dem oberen geführten Ende mit einem Kurbeltrieb (13) verbunden ist, **dadurch gekennzeichnet, daß** der Kurbeltrieb (13) an einem am Stützfuß (5) angelenkten Lenker (9) angreift und daß für das dem Stützfuß (5) gegenüberliegenden Ende des Lenkers (9) eine quer zur Stützfußführung (7) verlaufende Lenkerführung (10) vorgesehen ist.

2. Treppengängiger Handwagen nach Anspruch 1, **dadurch gekennzeichnet, daß** die Stützfußführung (7) aus einem einerseits am Fahrgestell (2) und anderseits am oberen Ende des Stützfußes (5) angelenkten Führungslenker (8) besteht.

3. Treppengängiger Handwagen nach Anspruch 1 oder 2, **dadurch gekennzeichnet, daß** die Lenkerführung (10) aus einer Führungskulisse (11) für das vom Stützfuß (5) abgewandte Lenkerende besteht.

4. Treppengängiger Handwagen nach Anspruch 3, **dadurch gekennzeichnet, daß** die Führungskulisse (11) radial zum Kurbeltrieb (13) verläuft.

## Claims

1. Stair climbing trolley with two wheels (3) mounted in an undercarriage and with a support foot (5) formed as a two-armed lever which is guided with its end lying opposite the lower placing end over the lifting height along a support foot guide (7) and is connected between the placing end and the upper guided end to a crank mechanism (13), **characterised in that** the crank mechanism (13) engages on a connecting rod (9) connected to the support foot (5) and **in that** a connecting rod guide (10) extending transversely to the support foot guide (7) is provided for the end of the connecting rod (9) lying opposite the support foot (5).

2. Stair climbing trolley according to claim 1, **characterised in that** the support foot guide (7) consists of a radius arm (8) connected on the one hand to the undercarriage (2) and on the other hand to the upper end of the support foot (5).

3. Stair climbing trolley according to claim 1 or 2, **characterised in that** the connecting rod guide (10) consists of a sliding guide (11) for the connecting rod end facing away from the support foot (5).

4. Stair climbing trolley according to claim 3, **characterised in that** the sliding guide (11) extends radially to the crank mechanism (13).

## Revendications

1. Chariot pouvant monter des escaliers, avec deux roues porteuses (3) montées dans un bâti de roulement, et avec un pied d'appui (5), réalisé sous la forme de levier à deux bras et guidé, par son extrémité opposée à l'extrémité de pose inférieure, sur la valeur de la hauteur de course, le long d'un guidage de pied d'appui (7) et relié à un mécanisme à manivelle (13) entre l'extrémité de pose et l'extrémité supérieure guidée, **caractérisé en ce que** le mécanisme à manivelle (13) agit sur un bras articulé (9) articulé sur le pied d'appui (5), et **en ce qu'**un guidage de bras articulé (10), s'étendant transversalement par rapport au guidage de pied d'appui (7), est prévu pour l'extrémité du bras articulé (9) située à l'opposé du pied d'appui (5).

2. Chariot pouvant monter des escaliers selon la revendication 1, **caractérisé en ce que** le guidage de pied d'appui (7) est composé d'un bras articulé de guidage (8) articulé, d'une part, sur le bâti de roulement (2) et, d'autre part, à l'extrémité supérieure du pied d'appui (5).

3. Chariot pouvant monter des escaliers selon la revendication 1 ou 2, **caractérisé en ce que** le guidage de bras articulé (10) est composé d'une coulisse de guidage (11) pour l'extrémité de bras articulé opposée au pied d'appui (5).

4. Chariot pouvant monter des escaliers selon la revendication 3, **caractérisé en ce que** la coulisse de guidage (11) s'étend radialement par rapport au mécanisme à manivelle (13).
